# EUROPEAN PATENT APPLICATION

(11) **EP 2 527 892 A1**
(43) Date of publication of application: **28.11.2012**
(21) Application number: 12153323.6
(22) Date of filing: 31.01.2012
(51) Int. Cl.: G02B 6/00, G02F 1/1335

(54) **Planar lighting apparatus and liquid crystal display having the same**

(30) Priority: 25.05.2011 KR 20110049464
(71) Applicant: Samsung Electronics Co., Ltd., Suwon-si, Gyeonggi-do, 443-742 (KR)
(72) Inventor: Lee, Sang-eun, Seoul (KR); Lee, Young-chol, Gyeonggi-do (KR); Jang, Nae-won, Gyeonggi-do (KR); Choi, Hyeong-sik, Gyeonggi-do (KR)
(74) Representative: Hewett, Jonathan Michael Richard

(57) **Abstract**

A planar lighting apparatus (1), liquid crystal display having the same and a television having the same are provided. The planar lighting apparatus (1) includes a reflection sheet (40); a prism sheet (50) which is spaced apart from the reflection sheet, and which includes a prism pattern (52) on a surface of the prism sheet facing the reflection sheet; and a light source (20) which emits light toward a space (5) between the reflection sheet and the prism sheet and is disposed on at least one side of the space, wherein the prism pattern has a shape which reflects the light emitted from the light source.

## Description

The present invention relates to a planar lighting apparatus, and more particularly, to a planar lighting apparatus having no light guide plate and a liquid crystal display having the same.

A planar lighting apparatus is an apparatus which emits illuminating light having uniform brightness distribution from a light emitting surface, and is used as a backlight unit of a liquid crystal display or an illumination lamp for advertisement.

The liquid crystal display is an apparatus which displays pictures using a liquid crystal panel. The liquid crystal panel displays pictures using liquid crystals which are a light receiving element that can not emit light by itself. Therefore, the liquid crystal display needs a planar lighting apparatus such as a backlight unit which supplies light to the liquid crystal panel.

Backlight units are generally classified into an edge-lit backlight unit which needs the light guide plate and a direct-lit backlight unit which does not need the light guide plate. The direct-lit backlight unit in which a light source is disposed directly below the liquid crystal panel can operate without the light guide plate. However, for displaying pictures with a good quality, it is difficult to make the liquid crystal display with the direct-lit backlight unit very thin.

On the other hand, the edge-lit backlight unit in which a light source is disposed at a side of the light guide plate, allows the liquid crystal display to be thinner. However, the edge-lit backlight unit has a problem that it takes a lot of assembly time since the type and number of components thereof are many. Also, since the light guide plate which guides light emitted from the light source is thick and heavy, the light guide plate accounts for most of the weight of the liquid crystal panel.

Therefore, a planar lighting apparatus which has the light source disposed on a side thereof like the edge-lit backlight unit, and which allows light of the light source to be emitted uniformly from the light emitting surface but does not use a light guide plate, is desired.

Exemplary embodiments of the present invention provide a planar lighting apparatus which has a light source disposed on a side thereof like an edge-lit backlight unit, does not use a light guide plate, and allows light emitted from the light source of the side thereof to be emitted uniformly across an entire light emitting surface.

According to an aspect of the present invention, there is provided a planar lighting apparatus including: a reflection sheet; a prism sheet which spaced apart from the reflection sheet, and comprises a prism pattern on a surface of the prism sheet facing the reflection sheet; and a light source which emits light toward a space between the reflection sheet and the prism sheet and is disposed on at least one side of the space, wherein the prism pattern has a shape which reflects the light emitted from the light source.

The prism pattern may include a plurality of parallel triangular pillars wherein at least two adjacent triangular pillars from among the plurality of triangular pillars are spaced apart from each other.

A section of each of the plurality of triangular pillars may include an apex projecting toward the reflection sheet, and an internal angle of the apex forms an obtuse angle.

A section of each of the plurality of triangular pillars may form an isosceles triangle, and two side internal angles of the isosceles triangle are approximately 30 to 36 degrees.

A section of each of the plurality of triangular pillars may form a scalene triangle, and one internal angle of the scalene triangle is approximately 30 to 36 degrees.

The planar lighting apparatus may further include: a light converging member which converges the light emitted from the light source and emits the converged light within a predetermined angle into the space.

The light converging member may include a cylinder lens.

At least a portion of the reflection sheet may be an inclined portion which is inclined with respect to the prism sheet.

The reflection sheet may be disposed in a plane parallel with a plane of the prism sheet.

The planar lighting apparatus may further include: a case which supports the prism sheet and the light source, wherein the reflection sheet is disposed on an inner surface of the case.

The planar lighting apparatus may further include: a transparent plate disposed between the prism sheet and the reflection sheet, wherein the light reflected by the reflection sheet is incident on the transparent plate.

The planar lighting apparatus may further include: a supporting plate which supports the prism sheet and is disposed adjacent to another surface of the prism sheet.

According to another aspect of the present invention, there is provided a liquid crystal display including: a liquid crystal panel; a planar lighting apparatus, which outputs the light to the liquid crystal panel, the planar lighting apparatus including: a reflection sheet; a prism sheet which is spaced apart from the reflection sheet, and comprises a prism pattern formed on a surface of the prism sheet facing the reflection sheet; and a light source which emits light toward a space between the reflection sheet and the prism sheet and is disposed at least one side of the space, wherein the prism pattern has a shape which reflects the light emitted from the light source.

The prism pattern may be formed as a plurality of parallel triangular pillars, and two adjacent triangular pillars among the plurality of triangular pillars are spaced apart from each other.

A triangular section of each of the plurality of triangular pillars may include an apex projecting toward the reflection sheet of which an internal angle is an obtuse angle.

The liquid crystal display may further include: a light converging member which converges the light emitted from the light source and emits the converged light within a predetermined angle into the space.

According to another aspect of the present invention, there is provided a television including: a liquid crystal display including a planar lighting apparatus; a signal processing unit which processes a received external signal and generates signals for displaying pictures on the liquid crystal display; wherein the planar lighting apparatus may include: a reflection sheet; a prism sheet which is spaced apart from the reflection sheet, and comprises a prism pattern formed on a surface of the prism sheet facing the reflection sheet; and a light source which emits light toward a space between the reflection sheet and the prism sheet and is disposed at least one side of the space, wherein the prism pattern has a shape which reflects the light emitted from the light source.

The cylinder lens may have a length corresponding to a length of the light source.

The other surface of the prism sheet may face the light emitting surface member.

The prism pattern comprises a plurality of triangular pillars arranged to receive light emitted from the light source and to reflect the received light toward the reflection sheet, and wherein a first triangular pillar from among the plurality of triangular pillars is spaced a predetermined distance from a second triangular pillar from among the plurality of triangular pillars.

A distance between an apex of the first triangular pillar and an apex of the second triangular pillar may be longer than a bottom side of a triangular section of the first triangular pillar.

The inclined portion of the reflection sheet may be inclined at approximately 1 to 2 degrees with respect to the prism sheet.

These and/or other aspects of the present invention will become apparent and more readily appreciated from the following description of the exemplary embodiments, taken in conjunction with the accompanying drawings of which:
FIG. 1 is a perspective view schematically illustrating a planar lighting apparatus according to an exemplary embodiment;
FIG. 2 is a sectional view schematically illustrating the planar lighting apparatus of FIG. 1 taken along a line 2-2 in FIG. 1;
FIG. 3 is a perspective view illustrating an example of a light converging member being used in the planar lighting apparatus of FIG. 1;
FIG. 4 is an enlarged partial perspective view illustrating a portion of a prism sheet of the planar lighting apparatus of FIG. 1;
FIG. 5 is a partial side view illustrating the prism sheet of FIG. 4;
FIG. 6 is a sectional view illustrating the planar lighting apparatus of FIG. 1 in which a reflection sheet is disposed parallel to a prism sheet;
FIGS. 7 to 9 are views schematically illustrating planar lighting apparatuses according to other exemplary embodiments;
FIG. 10 is a sectional view schematically illustrating a liquid crystal display including a planar lighting apparatus according to an exemplary embodiment; and
FIG. 11 is a functional block diagram illustrating a television including a planar lighting apparatus according to an exemplary embodiment.

Hereinafter, certain exemplary embodiments of the exemplary embodiments will be described in detail with reference to the accompanying drawings. Throughout the drawings, like reference numerals will be understood to refer to like parts, components and structures.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments. Further, dimensions of various elements in the accompanying drawings may be arbitrarily increased or decreased for assisting in a comprehensive understanding.

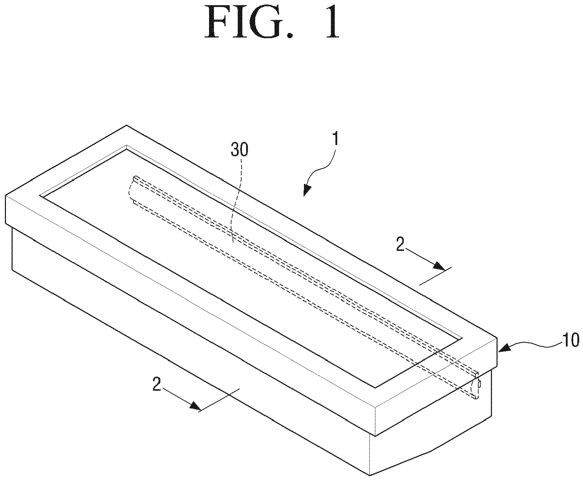

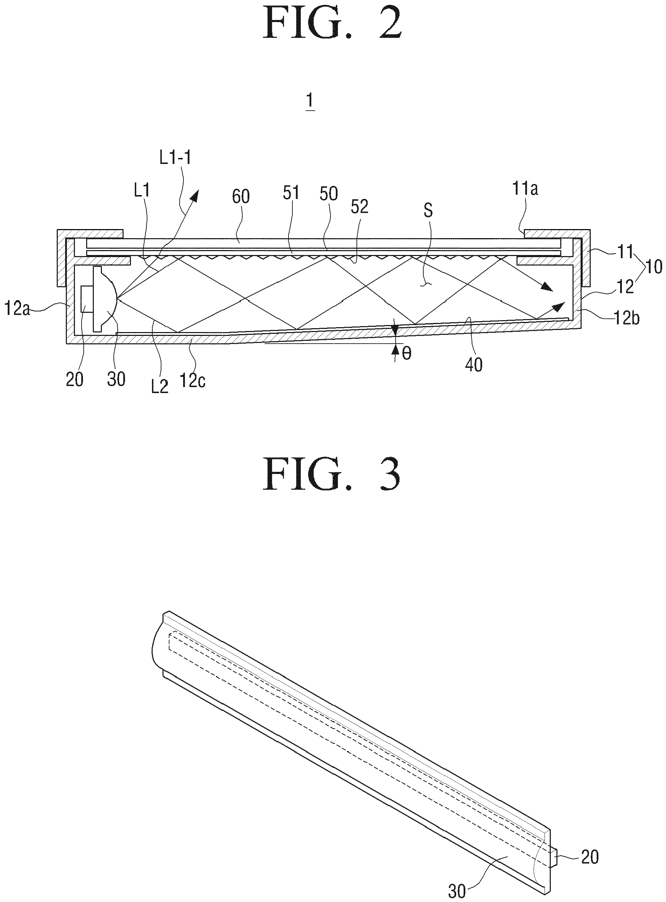

FIG. 1 is a perspective view schematically illustrating a planar lighting apparatus according to an exemplary embodiment. FIG. 2 is a sectional view schematically illustrating the planar lighting apparatus of FIG. 1 taken along a line 2-2 in FIG. 1.

Referring to FIGS. 1 and 2, the planar lighting apparatus 1 according to an exemplary embodiment may include a case 10, a light source 20, a light converging member 30, a reflection sheet 40, a prism sheet 50, and a light emitting surface member 60.

The case 10 forms the outer appearance of the planar lighting apparatus 1 and supports the light emitting surface member 60, the prism sheet 50, the reflection sheet 40, the light source 20, and the light converging member 30. The case 10 may be formed to include an upper case 11 and a lower case 12. The upper case 11 is formed as a rectangular shape and supports the light emitting surface member 60 and the prism sheet 50. An opening 11a is formed on a center of the upper case 11 and has a rectangular shape. The light emitting surface member 60 is exposed through the opening 11a. The lower case 12 is formed as a container with a bottom 12c that has a rectangular shape corresponding to the upper case 11. The lower case 12 supports the reflection sheet 40, the light source 20, and the light converging member 30.

The light source 20 is disposed on a side surface of the lower case 12 inside of the lower case 12. The light source 20 is formed to have a length corresponding to the length of a side surface 12a of the lower case 12. The light source 20 may include a plurality of light emitting diodes (LEDs). For example, a LED board that a plurality of LEDs are mounted in a predetermined interval on a printed circuit board corresponding to the length of the side surface 12a of the lower case 12 may be used.

The light converging member 30 is disposed in front of the light source 20, converges light emitted from the light source 20, and emits the converged light to a space S between the reflection sheet 40 and the prism sheet 50. For example, the light converging member 30 may be a collimating lens that can collect the light. Therefore, the emitting angle of the light emitted from the light source 20 may be controlled by the light converging member 30. The light converging member 30 may be formed in various methods as long as it can collect the light emitted from the light source 20 and can emit the converged light into the space S between the reflection sheet 40 and the prism sheet 50 within a predetermined range of angle. For example, as illustrated in FIG. 3, the light converging member 30 may be formed as a cylinder lens. The radius of the cylinder lens 30 may be determined in various values corresponding to the characteristic of the light source 20 and the height of the space S. For example, for minimizing the thickness of a liquid crystal panel the cylinder lens may have a radius of about 5 mm. The cylinder lens 30 may have a length corresponding to that of the LED board to cover all the plurality of LEDs that form the light source 20.

The reflection sheet 40 is disposed on the bottom 12c of the lower case 12. The reflection sheet 40 reflects the light emitted from the light source 20 and the light reflected on the prism sheet 50 so that the light is distributed uniformly across the entire light emitting surface member 60. The reflection sheet 40 may be formed of metal or resin having a high reflective performance. Alternatively, instead of attaching the reflection sheet 40 on the lower case 12, reflective material can be coated or sprayed on the bottom 12c of the lower case 12.

Also, as illustrated in FIG. 2, the reflection sheet 40 may be formed to have a predetermined inclined angle θ in order to heighten an effect in which the light emitted from the light source 20 reaches the opposite side surface 12b facing the side surface 12a of the lower case 12 on which the light source 20 is disposed. For example, the reflection sheet 40 may be formed in the bevel with respect to the bottom surface 12c of the lower case 12 by approximately 1- 2 degrees. In FIG. 2, the bottom surface 12c of the lower case 12 is formed to be inclined with respect to the prism sheet 50. Alternatively, the bottom surface 12c of the lower case 12 may be formed in parallel to the prism sheet 50 and only the reflection sheet 40 may be formed to be inclined with respect to the prism sheet 50.

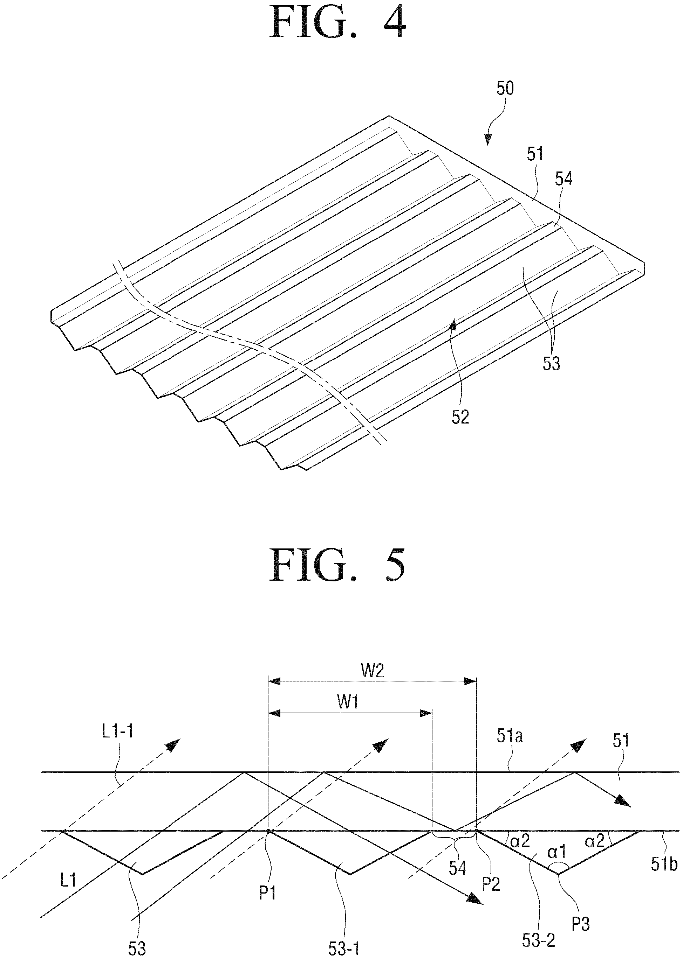

The prism sheet 50 is disposed above the reflection sheet 40 and may be spaced apart a predetermined distance from the reflection sheet 40. Therefore, a space S is formed between the prism sheet 50 and the reflection sheet 40. Since all the light which is emitted from the light source 20 and is passed through the light converging member 30, the light reflected on the prism sheet 50, and the light reflected on the reflection sheet 40 move through the space S, the space S is served as a pathway of the light. Therefore, the space S may be referred to a light moving space. A prism pattern 52 is formed on a bottom surface 51b of the prism sheet 50 (see FIG. 5), that is, a surface of the prism sheet 50 which faces the reflection sheet 40. The prism pattern 52 may be formed of a shape which can reflect a maximum amount of the light emitted from the light source 20. Therefore, the light emitted from the light source 20 which is disposed on a side surface of the lower case 12 may be evenly distributed across the entire light emitting surface member 60 by the prism sheet 50. An example of the prism sheet 50 is illustrated in FIG. 4.

Referring to FIG. 4, the prism sheet 50 is configured of a base plate 51 and the prism pattern 52 formed on the base plate 51. The base plate 51 is formed as a rectangular plate corresponding to the light emitting surface member 60 and is made of a transparent material through which the light can pass. The prism pattern 52 may be formed as a plurality of triangular pillars 53 which are arranged parallel to the light source 20. The plurality of triangular pillars 53 configured of the prism pattern 52 project toward the reflection sheet 40 as illustrated in FIG. 2. Also, the plurality of triangular pillars 53 forming the prism pattern 52 are spaced a certain distance from each other. That is, two nearby triangular pillars 53, e.g., two adjacent pillars, may be formed so as not to be in contact with each other. Therefore, measured with respect to an apex on the triangular pillar 53 of the prism pattern 52, a bottom side of a triangular section of the triangular pillar 53 may have a length shorter than a distance, also measured with respect to the same apex on the triangular pillar 53, between two nearby triangular pillars 53. FIG. 5 is a partial side view illustrating the prism sheet 50.

For example, referring to FIG. 5, with respect to the apex P1 of a first triangular pillar 53-1, the length W1 of the bottom side of the first triangular pillar 53-1 is shorter than the distance W2 (also measured with respect to the apex P1 of the first triangular pillar 53-1) between two nearby first and second triangular pillars 53-1 and 53-2. In other words, the distance W2 between a first apex P1 of the first triangular pillar 53-1 and a first apex P2 of the second triangular pillar 53-2 is longer than a bottom side of the first triangular pillar 53-1 having a length W1.

Also, a section of each of the plurality of triangular pillars 53 may be formed as a symmetrical triangle such as an isosceles triangle or as a scalene triangle of which the internal angles are all different. At this time, the triangle may be formed so that the internal angle α1 of an apex P3 projecting toward the reflection sheet 40 is an obtuse angle. For this the two side internal angles α2 thereof may be formed to have approximately 30 - 36 degrees. For example, in case of an isosceles triangle, if the two side internal angles α2 are approximately 30 - 36 degrees, the internal angle α1 is approximately 108 - 120 degrees. If the triangle has an apex P3 of an obtuse angle, much of the amount of light that passes through the triangular pillars 53 is totally reflected from an upper surface 51a of the prism sheet 50.

The light emitting surface member 60 allows the light passing through the prism sheet 50 to uniformly diffuse and emit. The light emitting surface member 60 has a structure similar to a light emitting surface member used in the related art edge-lit backlight unit. For example, the light emitting surface member 60 may be formed by overlapping a diffusion sheet, a light converging member sheet, etc. Therefore, a detailed description of the light emitting surface member 60 will be omitted.

Hereinafter, operation of the planar lighting apparatus 1 according to an exemplary embodiment having the above-described structure will be explained with reference to FIG. 2.

Light is emitted from the light source 20, which is disposed on the side surface 12a of the lower case 12, is converged within a predetermined range while passing through the light converging member 30 and moves into the light moving space S between the reflection sheet 40 and the prism sheet 50. A portion L1 of the light which moves into the light moving space S is incident on the top prism sheet 50, and the other portion L2 of the light is incident on the bottom reflection sheet 40.

A portion of the light L1 incident on the prism sheet 50 passes through the triangular pillars 53 of the prism pattern 52 and is totally reflected on the top surface 51a of the prism sheet 50. The totally reflected light again passes the prism pattern 52 and is incident on the reflection sheet 40. A portion of the light which passed through the triangular pillars 53 of the prism pattern 52 but does not satisfy a total reflection condition passes through the top surface 51a of the prism sheet 50 and is incident on the light emitting surface member 60. Also, another portion L1-1 of the light L1 incident on the prism sheet 50 passes through gaps 54 between the plurality of triangular pillars 53 of the prism pattern 52 and moves toward the top surface 51a of the prism sheet 50. In this case, since the amount of light that satisfies the total reflection condition is little, most of the light passes through the top surface 51a of the prism sheet 50 and is incident on the light emitting surface member 60. The light, which is totally reflected on the prism sheet 50 and is incident on the reflection sheet 40, is reflected on the reflection sheet 40, and then, is again incident on the prism sheet 50.

The light L2, which is emitted from the light source 20 and is incident on the reflection sheet 40, is reflected on the reflection sheet 40, and then, is incident on the prism sheet 50. The light incident on the prism sheet 50 moves the same as the light L1 which is directly incident on the prism sheet 50 from the light source 20 as described above so that some of the light is totally reflected on the prism sheet 50 and is again reflected to the reflection sheet 40 and the rest of the light passes through the prism sheet 50 and then is incident on the light emitting surface member 60.

The light L1 incident on the prism sheet 50 and the light L2 incident on the reflection sheet 40 move to the opposite side surface 12b of the lower case 12 while repeating the above-described process. Therefore, the light emitted from the light source 20 is uniformly emitted from the entire light emitting surface member 60.

When the light passed through the prism sheet 50 passes through the light emitting surface member 60, a viewing angle is adjusted by the light emitting surface member 60. Therefore, the planar lighting apparatus 1 according to an exemplary embodiment can emit light having proper brightness and viewing angle.

Because the planar lighting apparatus 1 according to an exemplary embodiment does not use a light guide plate, the planar lighting apparatus 1 has a simple structure, a lighter weight and a lower manufacturing cost compared to a planar lighting apparatus having the light guide plate. Also, because only prism sheet 50 is used without the light guide plate, a liquid crystal display 100 using the planar lighting apparatus 1 according to an exemplary embodiment may be thinner.

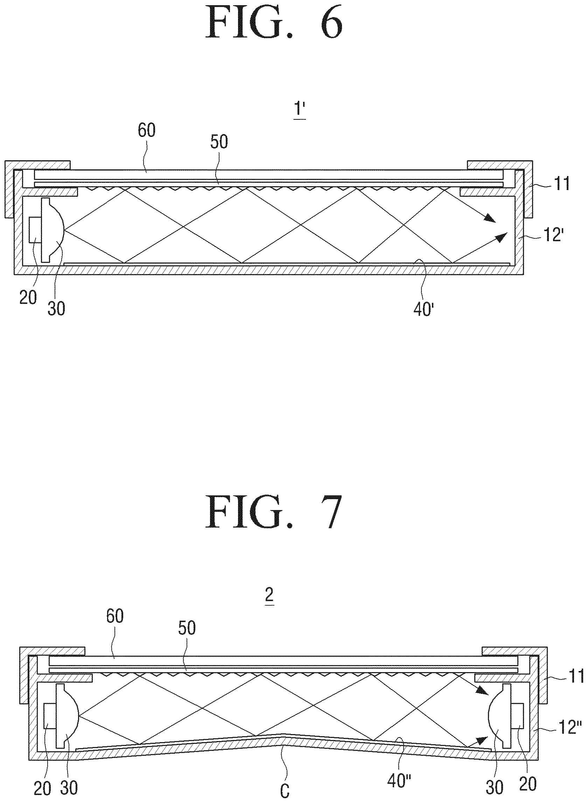

FIG. 6 is a variant example of the planar lighting apparatus 1 as illustrated in FIG. 2. In FIG. 6, a reflection sheet 40' is disposed in parallel to the prism sheet 50. The planar lighting apparatus 1' as illustrated in FIG. 6 is the same as the above-described planar lighting apparatus 1 of FIG. 2 except that a bottom surface of a lower case 12' is parallel to the prism sheet 50 and a reflection sheet 40' is disposed on the bottom surface thereof. Therefore, a detailed explanation of the planar lighting apparatus 1' as illustrated in FIG. 6 will be omitted.

FIG. 7 is a sectional view schematically illustrating a planar lighting apparatus according to another exemplary embodiment. Referring to FIG. 7, the planar lighting apparatus 2 according to this exemplary embodiment includes two light sources 20 and two light converging members 30 that face each other. The reflection sheet 40 is formed as a substantially triangular shape in which a center line C of the reflection sheet 40 projects upwardly. In other words, the reflection sheet 40 is formed to have two slope surfaces downwardly inclined toward the two light sources 20. For this the bottom surface of the lower case 12 is bent as the triangular shape. The planar lighting apparatus 2 according to this exemplary embodiment is similar to the planar lighting apparatus 1 of FIG. 2 as described above except that it includes two light sources 20 and two light converging members 30, and the bottom surface of the lower case 12 thereof is formed as a triangular shape. Therefore, a detailed explanation thereof will be omitted.

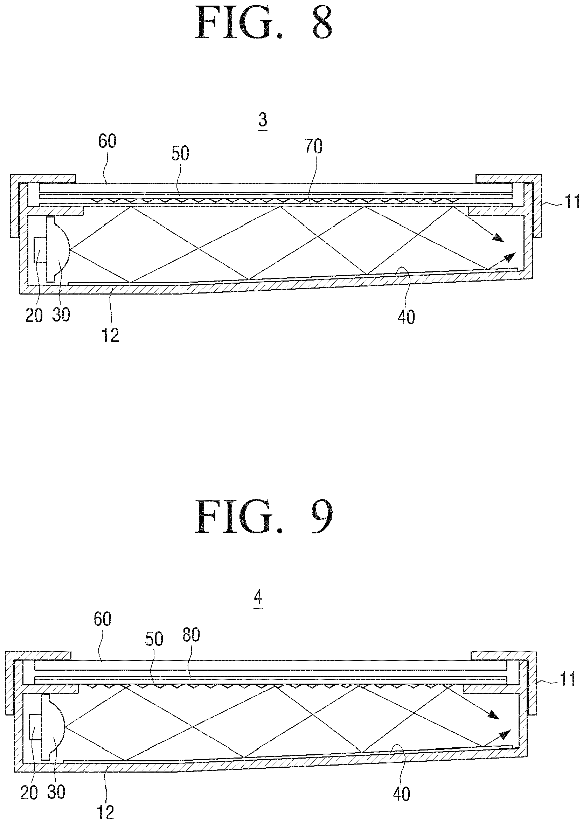

FIG. 8 is a sectional view schematically illustrating a planar lighting apparatus according to another exemplary embodiment. Referring to FIG. 8, the planar lighting apparatus 3 according to this exemplary embodiment further includes a transparent plate 70. The transparent plate 70 is disposed between the prism sheet 50 and the reflection sheet 40. At this time, the transparent plate 70 is disposed close or adjacent to the plurality of triangular pillars 53 of the prism sheet 50. Therefore, the light emitted from the light source 20 is not incident on the side surface of the transparent plate 70 but incident on a bottom surface of the transparent plate 70 facing the reflection sheet 40. In other words, the light emitted from the light source 20 is directly incident on the bottom surface of the transparent plate 70 or, after being reflected on the reflection sheet 40, is incident on the bottom surface of the transparent plate 70. Therefore, the transparent plate 70 is different from the light guide plate of which a side surface faces the light source 20 and the light emitted from the light source 20 is incident on. The planar lighting apparatus 3 as illustrated in FIG. 8 is the same as the planar lighting apparatus 1as illustrated in FIG. 2 except that it has the transparent plate 70. Therefore, a detailed explanation thereof will be omitted.

FIG. 9 is a sectional view schematically illustrating a planar lighting apparatus according to another exemplary embodiment. Referring to FIG. 9, the planar lighting apparatus 4 according to this exemplary embodiment further includes a supporting plate 80. The supporting plate 80 is disposed close or adjacent to the top surface of the prism sheet 50 (i.e., the surface facing the light emitting surface member 60) and supports the prism sheet 50. In other words, the supporting plate 80 supports the prism sheet 50 so that when the prism sheet 50 has a large size, the prism sheet 50 is not transformed by its own weight. The supporting plate 80 may be adhered to the top surface of the prism sheet 50 by adhesive not to be separated from the prism sheet 50.

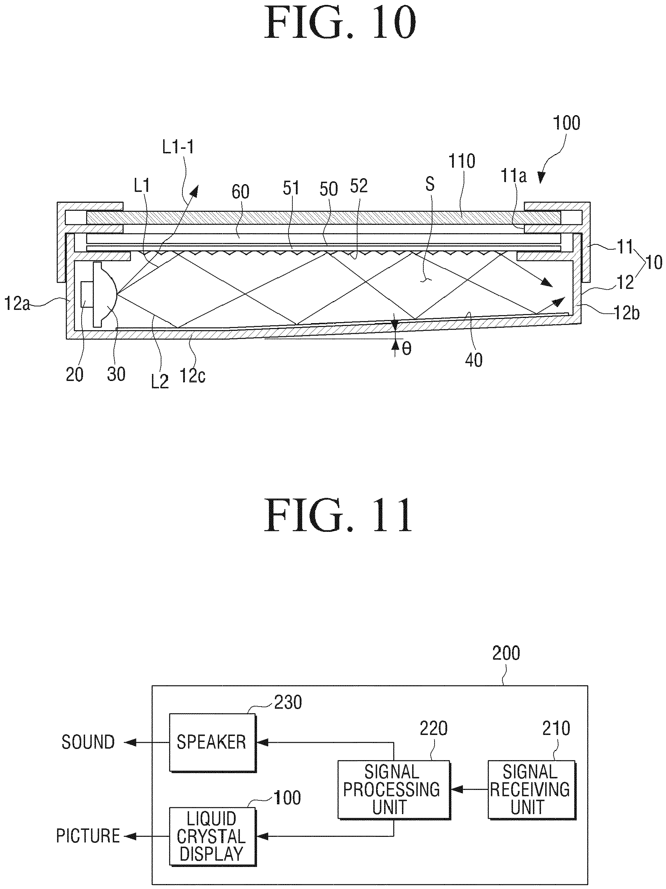

FIG. 10 is a sectional view schematically illustrating a liquid crystal display including a planar lighting apparatus according to an exemplary embodiment. Referring to FIG. 10, the liquid crystal display 100 according to this exemplary embodiment may include a liquid crystal panel 110. The liquid crystal panel 110 is supplied with the light by the above-described planar lighting apparatus 1 according to an exemplary embodiment. If the planar lighting apparatus 1 according to an exemplary embodiment is used, due to no light guide plate, the liquid crystal display 100 may have a lighter weight and a thinner thickness.

FIG. 11 is a functional block diagram illustrating a television 200 including a liquid crystal display 100 according to an exemplary embodiment. The television 200 may have a signal receiving unit 210, a signal processing unit 220, a speaker 230, and the liquid crystal display 100.

The signal receiving unit 210 receives an external signal including picture data and/or audio data. The external signal may include a broadcasting signal transmitted by a broadcasting station or an output signal sent by a peripheral device such as a digital versatile disc (DVD) player, a Personal Computer (PC), etc. Therefore, the signal receiving unit 210 may include an antenna and a tuna receiving the broadcasting signal and a connection member such as a connector receiving the output signal that a DVD player or a PC, etc. transmits.

The signal processing unit 220 processes the external signal received by the signal receiving unit 210 and then generates picture signals for displaying pictures on the liquid crystal display 100 and sound signals to allow the speaker 230 to output sound.

The speaker 230 receives the sound signal generated by the signal processing unit 220 and outputs sound.

The liquid crystal display 100 receives the picture signals generated by the signal processing unit 220 and displays the pictures. As described above, the liquid crystal display 100 according to an exemplary embodiment uses a backlight unit having no light guide plate, thereby having a thinner thickness.

FIG. 11 illustrates a television 200 to which the liquid crystal display 100 according to an exemplary embodiment is applied. However, this is only one example. The liquid crystal display 100 according to an exemplary embodiment may be applied to various apparatuses such as a computer monitor, an electronic display board, a mobile device, etc.

While exemplary embodiments have been described, additional variations and modifications of the exemplary embodiments may be made without departing from the invention, as defined by the appended claims.

## Claims

1. A planar lighting apparatus comprising:
a reflection sheet;
a prism sheet which is spaced apart from the reflection sheet, and which comprises a prism pattern formed on a surface of the prism sheet facing the reflection sheet; and
a light source which emits light toward a space between the reflection sheet and the prism sheet and is disposed at least one side of the space,
wherein the prism pattern has a shape which reflects the light emitted from the light source.

2. The planar lighting apparatus of claim 1, wherein the prism pattern is formed as a plurality of parallel triangular pillars, and two adjacent triangular pillars among the plurality of triangular pillars are spaced apart from each other.

3. The planar lighting apparatus of claim 2, wherein a triangular section of each of the plurality of triangular pillars has an apex projecting toward the reflection sheet of which an internal angle is an obtuse angle.

4. The planar lighting apparatus of claim 2, wherein a section of each of the plurality of triangular pillars forms an isosceles triangle, and two side internal angles of the isosceles triangle are approximately 30 - 36 degrees.

5. The planar lighting apparatus of claim 2, wherein a section of each of the plurality of triangular pillars forms a scalene triangle of which internal angles are all different, and one of two side internal angles of the scalene triangle is approximately 30 - 36 degrees.

6. The planar lighting apparatus of any one of the preceding claims further comprising:
a light converging member which is disposed in front of the light source and has a shape which converges the light emitted from the light source and to emit the light within a predetermined angle into the space.

7. The planar lighting apparatus of claim 6, wherein the light converging member comprises a cylinder lens.

8. The planar lighting apparatus of any one of the preceding claims, wherein the reflection sheet is inclined at 1 - 2 degrees with respect to the prism sheet.

9. The planar lighting apparatus of any one of claims 1 to 7, wherein the reflection sheet is disposed in parallel to the prism sheet.

10. The planar lighting apparatus of any one of the preceding claims further comprising:
a case supporting the prism sheet and the light source;
wherein the reflection sheet is disposed on an inner surface of the case.

11. The planar lighting apparatus of any one of the preceding claims further comprising:
a transparent plate which is disposed between the prism sheet and the reflection sheet and is close to the prism sheet so that the light reflected on the reflection sheet is incident on the transparent plate.

12. The planar lighting apparatus of any one of claims 1 to 10 further comprising:
a supporting plate which is disposed adjacent to a surface of the prism sheet that does not face the reflection sheet and supports the prism sheet.

13. A liquid crystal display comprising:
a planar lighting apparatus according to any one of the preceding claims.

14. A television comprising:
a liquid crystal display according to claim 13.
